# EUROPEAN PATENT APPLICATION

(11) **EP 2 441 349 A1**
(43) Date of publication of application: **18.04.2012**
(21) Application number: 11185133.3
(22) Date of filing: 14.10.2011
(51) Int. Cl.: A47B 47/00, F16B 7/02

(54) **Connection joint for tubular elements of a modular structure and relative assembly method**

(30) Priority: 15.10.2010 IT UD20100187
(71) Applicant: Sinetica Industries Srl, 31046 Oderzo (TV) (IT)
(72) Inventor: Vizzotto, Giampaolo, 31046 Oderzo (TV) (IT)
(74) Representative: Petraz, Gilberto Luigi

(57) **Abstract**

Joint (10) and method for the connection of a plurality of tubular elements (12,14). The joint comprises a central body (30) defining a convergence edge between three tubular elements (12,14), a first connection profile (31) extending laterally from the central body (30) along a first plane, a second connection profile (32) extending laterally from the central body (30) in a specular manner to the first profile (31) along the first plane, and a third connection profile (33) extending from the central body (30) along a second plane, substantially orthogonal to the first plane, and having a first body (35) attached to the central body (30) and provided with at least a first attachment surface (36) which cooperates, in use, with a relative internal surface of the third tubular element (14), and with a first guide surface (37) inclined with respect to the first attachment surface (36), and a second body (42), independent from the first body (35), disposed sliding with respect to the latter and provided with a relative second attachment surface (43) opposite the first attachment surface (36) to cooperate, in use, with a relative internal surface of the second tubular element, and with a second guide surface (45) disposed sliding on the first guide surface (37) and having an inclination coordinated with the latter.

## Description

### FIELD OF THE INVENTION

The present invention concerns a joint and a relative assembly method to connect a plurality of tubular elements of a modular structure with respect to each other, for example a structural frame of a piece of furniture, a desk, a table, shelves or similar. In particular, the joint according to the present invention is of the corner type, that is, suitable to allow the joining of two cross-pieces and an upright of the modular structure to each other, in which each is mounted substantially orthogonal with respect to the other, for example, to define a corner of the support frame of the piece of furniture.

### BACKGROUND OF THE INVENTION

In the furnishing sector, for example for modular tables, the problem of connecting two or more tubular elements with respect to each other is known, for example two or more supporting cross-pieces of a resting plane, and a upright, which defines the leg of the table, or other suitable support element for the resting plane from the ground.

One known solution to this problem provides to weld the cross-pieces and the upright to each other, with the disadvantage, however, of considerably limiting the possibility of dismantling the table and increasing its bulk when it is dismantled.

Another known solution provides to make through holes on the cross-pieces and to use plates, blocks and corner profiles, or other auxiliary elements external to the cross-pieces and the uprights, conformed so as to define the positioning and clamping of the three in an orthogonal trihedron. This known solution causes an unpleasant aesthetic effect, however, because a part of the screws, normally the heads, are visible, as well as the plates, blocks and profiles.

Moreover, this type of known solution can be of little effectiveness or quite costly, in the case in which one of the three tubular elements, for example the upright, has a triangular cross section.

Moreover, all the steps of reciprocal positioning of the tubular elements, of associating the plates, blocks and profiles, and the clamping of the screws, require relatively high technical knowledge and intervention times.

Therefore, the user who finds himself having to assemble the table by himself may run into considerable difficulties and obstacles, with the risk of not having a final solid anchorage, and with the possibility that the table might collapse during use.

From DE 296 01 648 U1 and from DE 20 2008 011834 U1 solutions are known which use sliding interference elements which make an interference between a three-way joint, positioned in correspondence to a corner of the structure to be made, and the internal wall of the upright which acts as a leg.

One of the frequent problems met in this type of solution is the jamming of the sliding component inside the tubular leg, given that this sliding element may incline while it is made to slide inside the leg, thus not guaranteeing that the maximum travel is carried out. Another problem is the imprecise and incomplete adhesion between the interference element and the internal wall of the tubular upright, so that the contact pressure is not distributed on the maximum surface available and therefore the grip is not optimal.

Purpose of the present invention is to make a joint and perfect a method which allow to connect tubular elements for modular furniture, such as a table, a desk or similar, in which the assembly elements are completely hidden inside the relative tubular elements, and in which a solid anchorage is guaranteed, without play between the tubular elements, in particular for the reciprocal and orthogonal connection of the three tubular elements.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a joint according to the present invention is used to connect a plurality of tubular elements of a modular structure.

In particular the joint according to the invention is applied in a coupling of the type in which at least a first tubular element and a second tubular element are disposed substantially coplanar and converge in a convergence edge, and a third tubular element is disposed substantially orthogonal to the first two tubular elements and converges in the same convergence edge forming a substantially trihedral structure.

According to the present invention the joint comprises at least:
- a central body able to substantially define the convergence edge between the three tubular elements;
- a first connection profile extending laterally from the central body along a first plane, substantially horizontal when in use, and having a transverse section able to be inserted inside an end segment of the first tubular element;
- a second connection profile extending laterally from the central body in a specular manner to the first connection profile along said first plane, and having a second transverse section able to be inserted inside an end segment of the second tubular element; and
- a third connection profile extending from the central body along a second plane, substantially orthogonal to the first plane, and having a first body attached to the central body and provided with at least a first attachment surface able to cooperate, in use, with a relative internal surface of the third tubular element, and with a first guide surface inclined with respect to the first attachment surface. The third profile also comprises a second body, independent from the first body, able to slide, in use, with respect to the latter and provided with a relative second attachment surface opposite the first attachment surface of the first body and able to cooperate, in use, with a relative internal surface of the second tubular element; it is also provided with a second guide surface able to slide, in use, on the first guide surface and having an inclination coordinated with the latter, in which said second guide surface of the second body has interference accentuation means which cooperate with mating interference accentuation means present in said first guide surface of the first body.

In one form of embodiment, the interference accentuation means consist a stepped profile present both in the first and in the second guide surfaces; the stepped profiles cooperate with each other in the insertion step of the second body with respect to the first body, preventing the edges of the second body from sticking or jamming on the internal walls of the tubular section, allowing to achieve the maximum insertion travel possible.

Moreover, thanks to the reciprocal cooperation between the stepped profiles of the first and the second body, the maximum interference surface possible is obtained, because the second body is prevented from inclining or moving with respect to the insertion position.

The coordinated inclination of the two guide surfaces makes the reciprocal sliding of the two bodies determine an expansion of the third connection profile in a substantially transverse direction to the third tubular element, and therefore, generating a transverse thrust of the attachment surfaces against the internal surfaces of the third tubular element itself, so as to determine the clamping of the third connection profile to the third tubular element.

In this way, the expansion of the third connection profile inside the third tubular element prevents a reciprocal longitudinal movement between the two, thus guaranteeing the mechanical attachment by interference between the parts.

With the present invention there is therefore the possibility of substantially simulating a condition of conical coupling between the attachment surfaces and the relative internal surfaces of the first tubular element, exploiting to the full the aesthetic and economic characteristics of expansion joints and, in any case, guaranteeing a solid anchorage, without play, at least with the third tubular element, substantially in any assembly condition.

According to the present invention, the connection joint also comprises expansion means associated to at least the third connection profile and able to be activated in order to determine the reciprocal sliding of the two bodies in a direction substantially longitudinal to the third profile, so as to determine the dimensional expansion of the transverse section of the third connection profile inside the third tubular element.

According to a further variant, the first attachment surface of the first body and the second attachment surface of the second body are substantially parallel to each other.

According to another variant, the first guide surface of the first element has an inclination with respect to the relative first attachment surface in the range of a few degrees. For example, such inclination is comprised between about 2° and about 8°, advantageously between about 4°and about 6°.

According to another variant, the central body and the first body comprise a common through hole, oriented in a direction longitudinal to the third profile, the second body comprises a threaded seating disposed, in use, substantially aligned to the through hole, and the expansion means comprise a screw element disposed through inside the through hole of the first body, and able to be screwed into the threaded seating of the second body.

In this variant solution, the screwing of the screw element in the threaded seating determines the movement of the second body with respect to the first body and therefore, the expansion of the latter inside the third tubular element.

According to a further variant, the central body comprises a positioning seating for the screw element, conformed so as to allow it to be disposed in the through hole and also to be rotated with respect to the threaded seating, and at the same time, to prevent the axial movement thereof toward the inside of the third tubular element.

The positioning seating also allows an easy and convenient activation of the screw from outside the central body.

According to a variant, the first connection profile also comprises two bodies sliding reciprocally along the inclined guide surfaces, to define the expansion of the first connection profile inside the first tubular element.

According to another variant, the second connection profile also comprises two bodies sliding reciprocally along the inclined guide surfaces, to define the expansion of the second connection profile inside the second tubular element.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows an exploded three-dimensional view of a modular furnishing element to which four joints according to the present invention are applied;
- fig. 2 shows an enlarged exploded three-dimensional view of one of the joints in fig. 1;

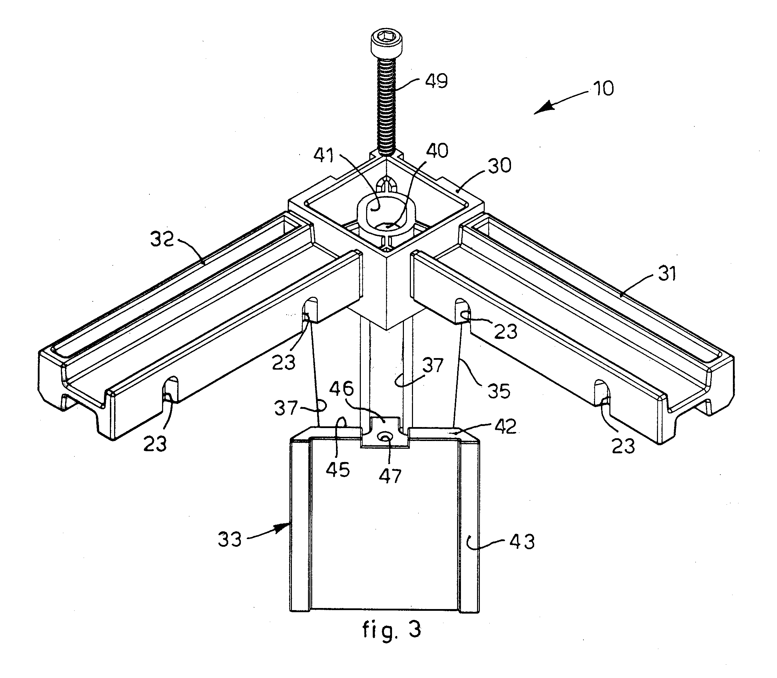

- fig. 3 shows a frontal three-dimensional view of the joint in fig. 2;

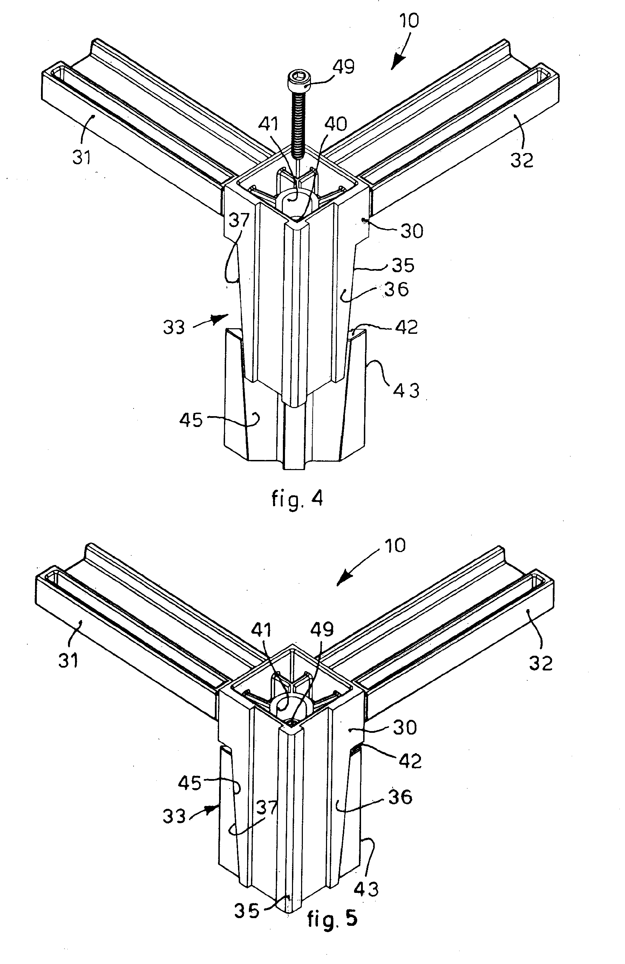

- fig. 4 shows a back three-dimensional view of the joint in fig. 3;
- fig. 5 shows a back three-dimensional view of the joint in fig. 3, in a different operating condition;
- fig. 6 shows a variant of fig. 4;
- fig. 7 shows an exploded lateral view of a detail of the connection joint according to the present invention;
- fig. 8 shows a longitudinal section of the connection joint in fig. 7 in an assembled position.

To facilitate comprehension, the same reference numbers have been used, where possible, to identify identical common elements in the drawings.

### DETAILED DESCRIPTION OF A PREFERENTIAL FORM OF EMBODIMENT

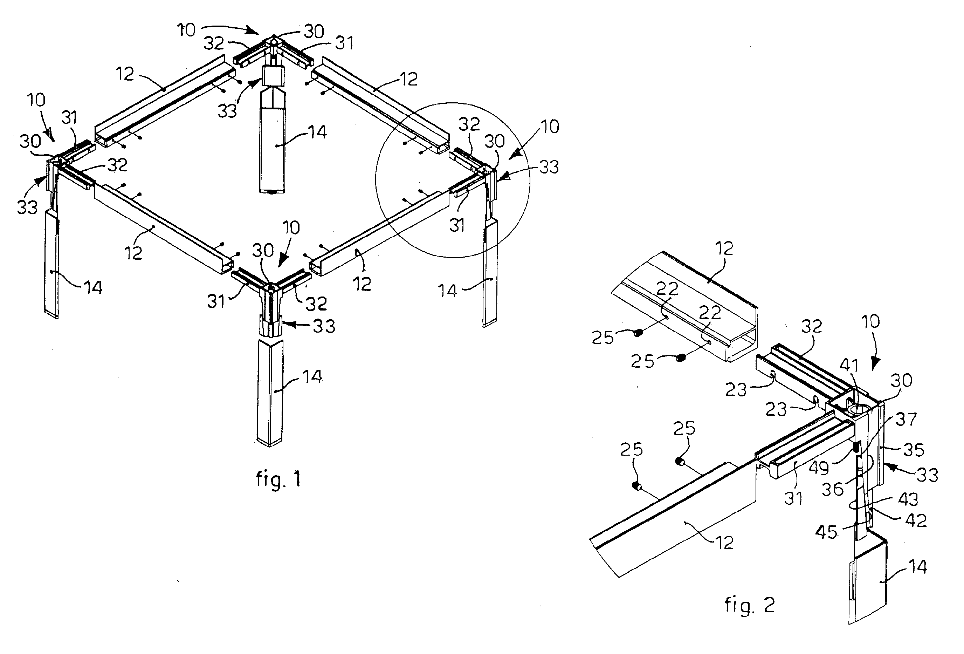

With reference to fig. 1, a connection joint 10 according to the present invention can be used to connect two horizontal cross-pieces 12 and an upright 14 of the frame of a piece of furniture with respect to each other, in the case shown the piece of furniture is a table 16.

Both the horizontal cross-pieces 12 and the upright 14 are made from tubular sections, that is provided with a though longitudinal cavity.

Each horizontal cross-piece 12, in this case, has a rectangular transverse section, and a resting plane (of a known type and not shown) of the table 16 can be attached at the upper part thereof, whilst the upright 14 has a triangular transverse section and is constrained to the two horizontal cross-pieces 12, so as to make the legs or other support element of the table 16.

It is not excluded that the joint 10 according to the present invention can be efficiently applied also to modular structures in which the horizontal cross-pieces 12, the upright 14 and possible other structural elements to which the joint 10 can be associated, have different transverse sections other than rectangular and triangular, for example circular, ovoidal or other.

In this case, the two cross-pieces 12 and the upright 14 are reciprocally disposed orthogonal with respect to each other to define a trihedral structure.

In the solution shown in the attached drawings, two through holes 22 aligned longitudinally to each other, facing toward the inside of the table 16, are made on the lateral walls of the horizontal cross-pieces 12, the function of which will be explained more in detail hereafter.

In particular the joint 10 comprises a central body 30, a first connection profile 31, a second connection profile 32 and a third connection profile 33, assembled on the central body 30 according to the reciprocal trihedral disposition that is to be achieved for the two horizontal cross-pieces 12 and for the upright 14.

The first profile 31 has a rectangular transverse section coordinated with the longitudinal cavity of the first horizontal cross-piece 12, and is provided with a pair of threaded holes 23 disposed, in use, in correspondence to the through holes 22 of the first horizontal cross-piece 12.

In this case, as shown in the detail in fig. 2, relative headless screws 25 or worm screws are operatively positioned inside the through holes 22 and the threaded holes 23, to reciprocally attach the parts.

In a specular way to the first profile 31, with respect to the central body 30, the second profile 32 has a rectangular transverse section coordinated with the longitudinal cavity of the second horizontal cross-piece 12, and this is also provided with a pair of threaded holes 23, disposed, in use, in correspondence to the through holes 22 of the first horizontal cross-piece 12.

The third profile 33 comprises a first body 35, attached to the central body 31 and provided, in general, with at least an attachment surface 36, substantially flat and able to cooperate with a relative internal surface of an end segment of the upright 14. In this case, since the upright 14 has a substantially triangular shaped transverse section, the first body 35 comprises two attachment surfaces 36 which cooperate with two relative internal surfaces of the end segment of the upright 14.

The first body 35 also comprises an inclined guide surface 37, in this case by an angle of about 4-5°, with respect to the attachment surface 36, and a longitudinal seating 39 made in a median zone of the guide surface 37.

Between the central body 30 and the first body 35 of the third profile 33 a through hole 40 is provided, oriented longitudinally to the third profile 33, in this case substantially aligned with the longitudinal seating 39.

A positioning seating 41 is made on the central body 30, substantially shaped as an eyelet or slit, and open on one side toward the outside of the central body 30, and on the other side toward the through hole 40.

The third profile 33 also comprises a second body 42, mobile in a longitudinal direction with respect to the first body 35 and provided with at least an attachment surface 43 which is substantially flat and able to cooperate with a relative internal surface of an end segment of the upright 14.

The second body 42 also comprises a guide surface 45 resting in a sliding manner on the guide surface 37 and inclined with respect to the attachment surface 43 in a manner coordinated to the guide surface 37.

The guide surface 45 of the second body 42, on its face which cooperates, in use, with the guide surface 37 of the first body 35, and the guide syrface 37, have interference accentuation means, which cooperate with each other when the second body 42 is made to slide on the first body 35 in the step of assembling the joint.

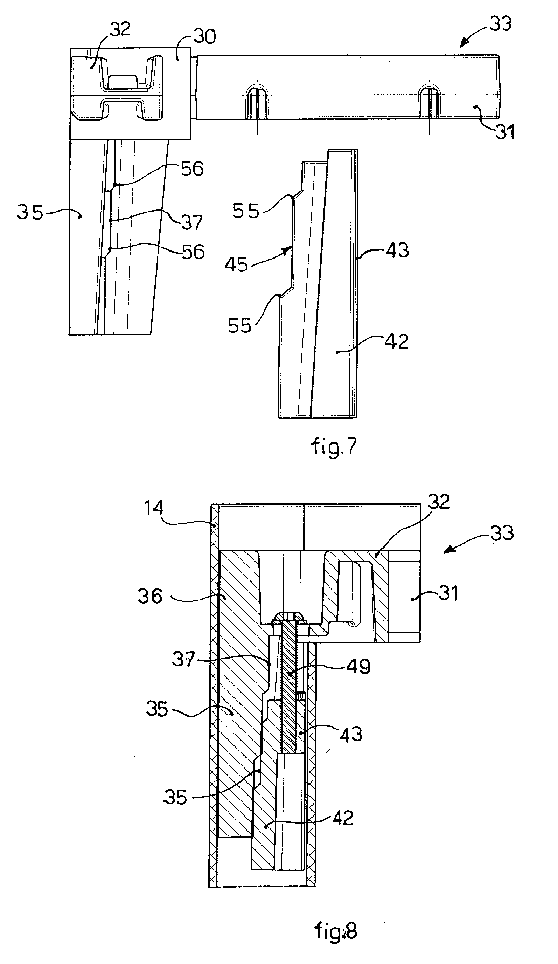

In the solution shown in figs. 7 and 8, the interference accentuation means consist of a mating stepped profile, respectively indicated by the number 55 for the second body 42 and by the number 56 for the first body 35.

When the second body 42 is made to slide on the first body 35, as will be shown hereinafter, the two guide surfaces 37 and 45 slide one on the other, and the respective stepped profiles 55 and 56 cooperate with each other, so that the second body 42 is thrust toward the outside and the end edges of the second body 42 are prevented from jamming with respect to the adjacent walls.

Moreover, the reciprocal cooperation between the stepped profiles 55 and 56 of the first body 35 and the second 36 body allows to achieve the maximum interference surface possible, because it prevents the second body 42 inclining or moving with respect to its insertion position.

The second body 42 also comprises a longitudinal rib 46 made in a median zone of the guide surface 37, and having a conformation such as to slide inside the longitudinal seating 39.

On a head surface of the longitudinal rib 46 a threaded hole 47 is made, disposed aligned to the through hole 40.

In this way, between the through hole 40 and the threaded hole 47 an expansion screw 49 is operatively disposed.

In particular the expansion screw 49 is housed with its head inside the positioning seating 41, with its shaft inside the through hole 40 and with its threaded section inside the threaded hole 47.

The positioning seating 41 has a shape and size such as to allow both the complete housing of the expansion screw 49 and also its rotation to effect the screwing, but it prevents axial movements of the expansion screw 49 toward the inside of the third profile 33.

In this way, screwing the expansion screw 49 determines a longitudinal sliding of the second body 42 with respect to the first body 35. Due to the effect of the inclination of the guide surfaces 37 and 45 which are in contact with each other, the sliding of the two bodies 35 and 42 determines an expansion in width of the third profile, bringing the attachment surfaces 36 and 43 under pressure against the relative internal surfaces of the upright 14, guaranteeing an optimum attachment condition between the parts.

It is clear that modifications and/or additions of parts may be made to the joint 10 as described heretofore, without departing from the field and scope of the present invention.

For example, it comes within the field of the present invention to provide that the profile 31 and/or the second profile 32 are provided with two bodies 35 and 42, in order to define an expansion of the first profile 31 inside the first horizontal cross-piece 12 and/or of the second profile 32 inside the second horizontal cross-piece 12.

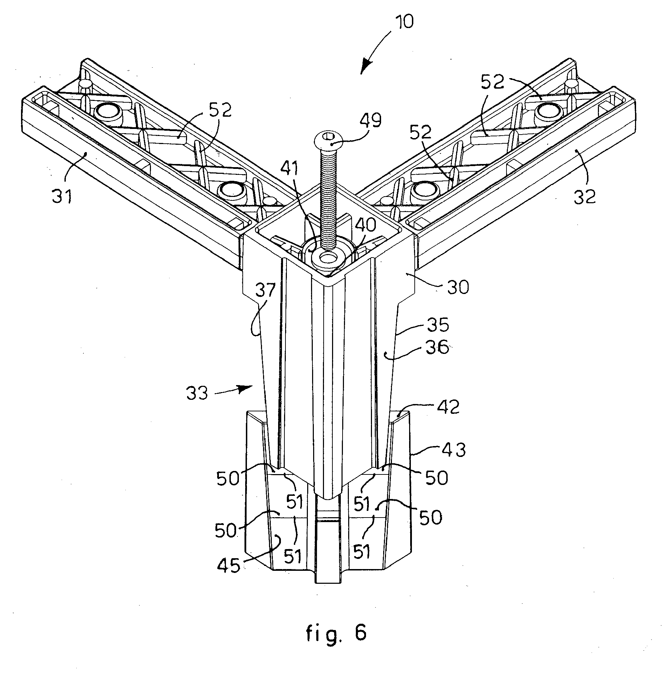

As shown in the variant in fig. 6, it also comes within the field of the present invention to provide that the guide surface 45 of the second body 42 is provided with two or more notches 50, conformed to define an equal number of contact edges 51 with the guide surface 37 of the first body 35. In this variant solution, there is a considerable reduction in the contact surface between the first body 35 and the second body 42, so as to considerably facilitate the production operations and to increase the precision and efficiency of the coupling.

In the same form of embodiment, both on the first profile 31 and on the second profile 32, relative stiffening ribs 52 are provided, suitable to increase the resistance to bending and torsion of each profile 31 and 32.

It also comes within the field of the present invention to provide that the first element 35 and/or the second element 42 have lightening grooves on the opposite side to the relative guide surfaces 37, 45, so as to reduce the overall weight and costs of the connection joint 10.

It is also clear that, although the present invention has been described with reference to some specific examples, a person of skill in the art shall certainly be able to achieve many other equivalent forms of connection joint for tubular elements of a modular structure and the relative assembly method, having the characteristics as set forth in the claims and hence all coming within the field of protection defined thereby.

## Claims

1. Connection joint for a plurality of tubular elements (12, 14) of a modular structure (16), wherein at least a first tubular element (12) and a second tubular element (12) are disposed substantially coplanar and converge in a convergence edge, and a third tubular element (14) is disposed substantially orthogonal to the first and the second tubular elements (12) and converge in the same convergence edge forming a substantially trihedral structure, **characterized in that** it comprises at least:
- a central body (30) defining the convergence edge between the three tubular elements (12, 14);
- a first connection profile (31) extending laterally from said central body (30) along a first plane, and which can be inserted inside the first tubular element (12);
- a second connection profile (32) extending laterally from said central body (30) in a specular manner to said first profile (31) along said first plane, and insertable inside the second tubular element (12); and
- a third connection profile (33) extending from said central body (30) along a second plane, substantially orthogonal to the first plane, and having a first body (35) attached to said central body (30) and provided with at least a first attachment surface (36) able to cooperate, in use, with a relative internal surface of the third tubular element (14), and with a first guide surface (37) inclined with respect to said first attachment surface (36), and a second body (42), independent from said first body (35), able to slide with respect to the latter and provided with a relative second attachment surface (43) able to cooperate, in use, with a relative internal surface of the second tubular element (12), and with a second guide surface (45) able to slide on said first guide surface (37) and having an inclination coordinated with the latter, wherein said second guide surface (45) of the second body has interference accentuation means (55) which cooperate with mating interference accentuation means (56) present in said first guide surface (37) of the first body (35).

2. Joint as in claim 1, **characterized in that** said interference accentuation means consist of a stepped profile (56, 55) present both in the first and in the second guide surfaces (37, 45), said stepped profiles (55, 56) cooperate with each other in the step of inserting the second body (42) with respect to the first body (35).

3. Joint as in claim 1, **characterized in that** it also comprises expansion means (49) associated to at least the third profile (33) and able to be activated in order to determine the reciprocal sliding of the two bodies (35, 42) in a direction substantially longitudinal to said third profile (33), so as to determine the dimensional expansion of the transverse section of said third profile (33) inside the third tubular element (14).

4. Joint as in claim 1 or 2, **characterized in that** the first attachment surface (36) and the second attachment surface (43) are substantially parallel to each other.

5. Joint as in any claim hereinbefore, **characterized in that** the first guide surface (36) has an inclination with respect to the relative first attachment surface (36) in the range of a few degrees.

6. Joint as in claim 5, **characterized in that** the inclination of the first guide surface (36) is comprised between about 2° and about 8°, advantageously between about 4° and about 6°.

7. Joint as in any claim from 2 to 5, **characterized in that** the central body (30) and the first body (35) comprise a common through hole (40), oriented in a direction longitudinal to the third profile (33), the second body (42) comprises a threaded seating (47) disposed substantially aligned to said through hole (40), and the expansion means comprise a screw element (49) disposed through inside said through hole (40) and able to be screwed into said threaded seating (47).

8. Joint as in claim 7, **characterized in that** the central body (30) comprises a positioning seating (41) for the screw element (49).

9. Joint as in any claim hereinbefore, **characterized in that** the second guide surface (45) comprises two or more notches (50) conformed so as to define an equal number of contact edges (51) with the first guide surface (37).

10. Method to connect a plurality of tubular elements (12, 14) of a modular structure (16) by means of a connection joint, wherein at least a first tubular element (12) and a second tubular element (12) are disposed substantially coplanar and converge in a convergence edge, and a third tubular element (14) is disposed substantially orthogonal to the first and the second tubular element (12) and converges in the same convergence edge forming a substantially trihedral structure, **characterized in that** it comprises at least a step of supplying a connection joint (10) having:
- a first connection profile (31) extending laterally from said central body (30) along a first plane, and having a transverse section conformed so as to be able to be inserted inside an end segment of the first tubular element (12);
- a second connection profile (32) extending laterally from said central body (30) in a specular manner to said first profile (31) along said first plane, and having a transverse section conformed so as to be able to be inserted inside an end segment of the second tubular element (12); and
- a third connection profile (33) extending from said central body (30) along a second plane, substantially orthogonal to the first plane, and having a first body (35) attached to said central body (30) and provided with at least a first attachment surface (36) able to cooperate, in use, with a relative internal surface of the third tubular element (14), and with a first guide surface (37) inclined with respect to said first attachment surface (36), and a second body (42), independent from said first body (35), disposed sliding with respect to the latter and provided with a relative second attachment surface (43) opposite to said first attachment surface (36) and able to cooperate, in use, with a relative internal surface of the second tubular element, and with a second guide surface (45) disposed sliding on said first guide surface (37) and having an inclination coordinated to the latter, in which, when said second body (42) is made to slide with respect to said first body (35), interference accentuation means (55) present on said second guide surface (45) are made to cooperate with interference accentuation means (56) present in said first guide surface (37) of the first body (35) so as to generate a reciprocal thrust which prevents said second body (42) from jamming.

11. Method as in claim 10, **characterized in that** it also comprises an expansion step, in which by means of expansion means (49) associated at least to the third profile (33), the reciprocal sliding of the first body (35) and of the second body (42) is determined in a direction substantially longitudinal to said third profile (33), so as to determine the dimensional expansion of the transverse section of said third profile (33) inside the third tubular element (14).
